# EUROPEAN PATENT APPLICATION

(11) **EP 4 098 837 A1**
(43) Date of publication of application: **07.12.2022**
(21) Application number: 20919702.9
(22) Date of filing: 18.02.2020
(51) Int. Cl.: E06B 3/964

(54) **CONNECTION DEVICE FOR DOOR AND WINDOW FRAMES**

(71) Applicant: Taroko Door & Window Technologies, Inc., Gaoxiong City, Taiwan 83160 (TW)
(72) Inventor: LIN, Ruifeng, Gaoxiong, 83160 Taiwan (TW); CHEN, Huie, Gaoxiong, 83160 Taiwan (TW)
(74) Representative: Tahtadjiev, Konstantin
(86) International application number: PCT/CN2020/075731
(87) International publication number: WO 2021/163887

(57) **Abstract**

A connection device for door and window frames comprises a main body (1) and two bases (2). The two bases (2) are respectively disposed on two opposite side surfaces of the main body (1) so as to attach to frames (9) adjacent to the two opposite side surfaces of the main body (1). The connection device for door and window frames can optimize the installation efficiency and appearance of doors and windows, folding window screens, or retractable window screens.

## Description

### FIELD OF INVENTION

The present invention relates to a spare part which can be installed on doors and windows, in particular to a connection device for door and window frames.

### BACKGROUND OF INVENTION

Current installation method of a door/window structure is first to combine four frame materials together, and then to assemble a folding screen window or a rolling screen window on the combined frame. However, the sizes of doors or windows installed on buildings are not the same, which not only increases the inventory pressure of door/window frame materials, but also increases the difficulty of stocking frame materials of the folding screen window or the rolling screen window. At present, when the size of the installation environment is too wide and long, and the size of the frame material is not long enough, or when the frame material is cut into sections for handling needs, most of the door and window manufacturers will use connection methods to combine frame materials together. However, most connection methods of frame materials are welding or screwing, which will damage or deform the structure of the frame materials, and at the same time which will also greatly affect the overall appearance of the combined frame.

### SUMMARY OF INVENTION

Therefore, the purpose of the present invention is to provide a connection device for door and window frames that can connect the frame materials of doors and windows, folding screen windows, or rolling screen windows together, so as to meet the requirements of various installation specifications and sizes.

Accordingly, the connection device for the door and window frames of the present invention includes a main body and two bases. The two bases are respectively disposed on two opposite side surfaces of the main body, so as to connect the frame materials adjacent to the two opposite side surfaces of the main body.

The effect of the present invention is that: by connecting the bases of the connection device with the frame materials, the combined frame materials can comply with the size specifications of the of the doors, windows, folding screen windows, or rolling screen windows to be installed, and the connecting process can also be quickened and simplified. At the same time, the frame materials can be prevented from being damaged or deformed during the connecting process, thereby optimizing the installation efficiency and appearance of the construction of doors and windows, folding screen windows, or rolling screen windows.

### DESCRIPTION OF DRAWINGS

FIG. 1 is an exploded perspective view showing a first embodiment of a connection device for door and window frames of the present invention as well as showing the first embodiment cooperated with two frame materials.
FIG. 2 is a schematic diagram showing the completed assembly of the first embodiment and the frame materials.
FIG. 3 is an exploded perspective view showing a second embodiment of a connection device for door and window frames of the present invention.
FIG.4 is an exploded perspective view showing the second embodiment of the connection device for door and window frames of the present invention as well as showing the second embodiment is cooperated with two frame materials.
FIG. 5 is a schematic diagram showing the completed assembly of the second embodiment and the frame materials.

### DETAILED DESCRIPTION OF PREFERRED EMBODIMENTS

Before the present invention is described in detail, it should be noted that in the following description, similar elements are designated by the same reference numerals.

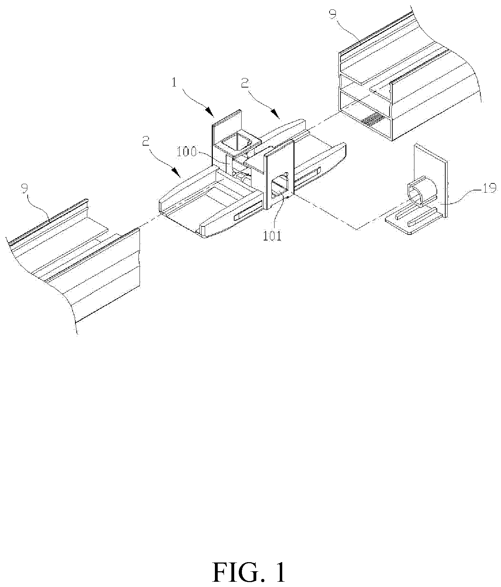

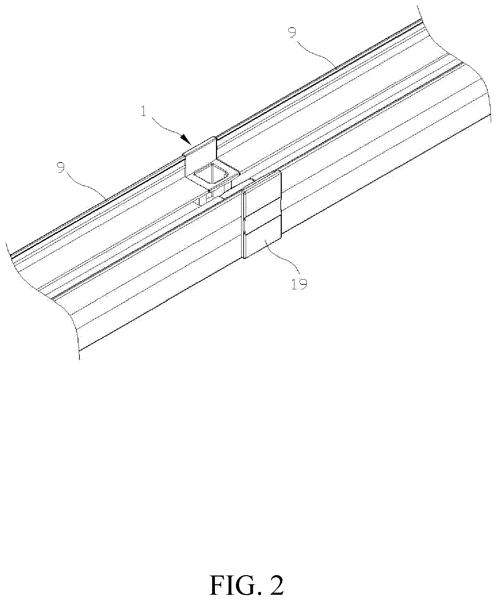

Referring to FIG. 1 and FIG. 2, a first embodiment of the connection device for door and window frames of the present invention is suitable for connecting two frame materials 9 together. The connection device includes a main body 1 and two bases 2, and the bases 2 respectively extend from the main body 1 to two opposite sides. The main body 1 is provided with a through hole 100 extending laterally. The main body includes a side cover 19, and the side cover 19 detachably covers an opening 101 on one end of the through hole 100.

When installing doors and windows, folding screen windows, or rolling screen windows, if the length of the frame material 9 is insufficient, the first embodiment can used to combine the frame materials 9 so as to extend the length of the frame material to meet the dimensions of doors and windows, folding screen windows, or rolling screen windows to be installed. In this case, only the frame materials 9 need to be directly disposed on the bases 2, so that the combining process can be quickly and conveniently completed without using tools, and the size of the frame materials can be extended quickly and easily. Therefore, the effect of optimizing efficiency of the combining process can be achieved. In addition, the connection device can be fixed on a door frame or a wall by using a locking element passing through the through hole 100 from the opening 101, and the side cover 19 can be used to cover the opening 101, so that the locking element can be hidden and not exposed, thus allowing the overall appearance to be aesthetically pleasing.

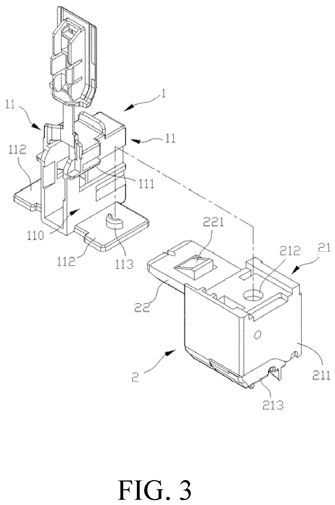

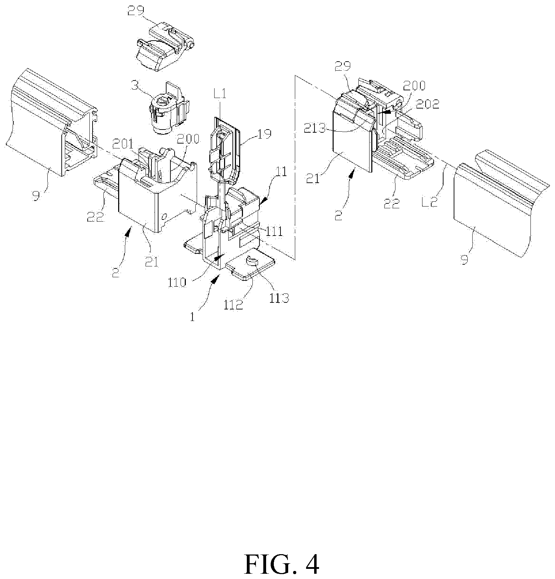

Referring to FIG. 3 and FIG. 4, and FIG. 3 and FIG. 4 respectively show a second embodiment of the connection device for door and window frames of the present invention. The difference between the second embodiment and the first embodiment is that the main body 1 has two first mounting portions 11 respectively facing toward the bases 2. Each base 2 is provided with an accommodating space 200 and has a second mounting portion 21, a coupling member 22 and a cover 29. The second mounting portion 21 is opposite to the first mounting portion 11. The coupling member 22 extends toward the frame material 9 and is suitable for connecting with the frame material 9. The cover 29 is disposed on a notch 201 on the top of the accommodating space 200 and closes the accommodating space 200. The first mounting portion 11 has a protruding rib 111 located on its side surface, a plate body 112 spaced from the protruding rib 111, a latching space 110 defined by the protruding rib 111 and the plate body 112, and a positioning protrusion 113 disposed on the plate body 112. The second mounting portion 21 has an engaging portion 211 corresponding to the latching space 110, a positioning portion 213 provided on an upper edge of the engaging portion 211, and a positioning concave portion 212 corresponding to the positioning protrusion 113. That is to say, the first mounting portion 11 and the second mounting portion 21 can be combined with each other by abutting the protruding rib 111 against the positioning portion 213, by engaging the engaging portion 211 into the latching space 110, and further by using a mechanism in which the shapes of the positioning protrusion 113 and the positioning concave portion 212 cooperate with each other, so that the base 2 can be fixed on the side surface of the main body 1.

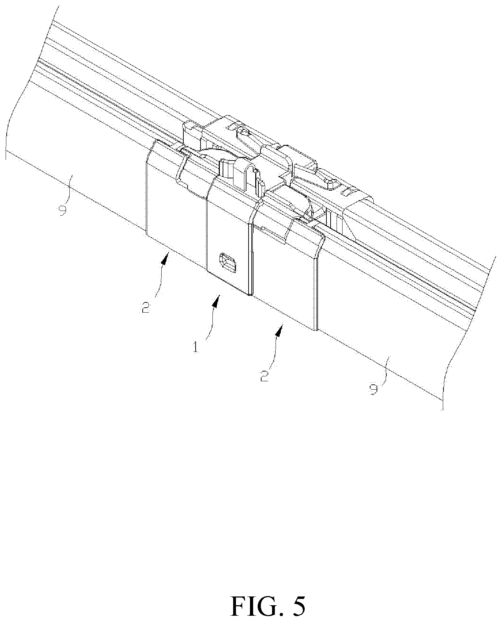

Referring to FIG. 5 as well as FIG. 3 and FIG. 4, when using the second embodiment, the two bases 2 only need to be respectively fixed on two opposite side surfaces of the main body 1, and the coupling members 22 of the bases 2 are respectively inserted into two frame materials 9 for connection. An elastic hook portion 221 is disposed on the coupling member 22, so that when the frame material 9 is coupled to the coupling member 22, the elastic restoring force of the elastic hook portion 221 provides additional fixing force to enhance the combining strength between the frame materials 9 and the second embodiment. In addition, since the second embodiment also can be used to extend the length of the frame materials in a connecting manner to meet the requirements of different sizes of doors and windows, folding screen windows, or rolling screen windows to be installed. Therefore, as in the first embodiment, the combining process of the second embodiment can be quickly and conveniently completed without using tools and the size of the frame materials can be extended quickly and easily.

Referring to FIG. 4 again, the accommodating space 200 is provided with an opening 202 in the direction of the coupling member 22, and a magnet (not shown in the figure) can be disposed in the opening 202. Meanwhile, a metal sheet can be disposed on a position relative to the magnet on a handle of the door and window, the folding screen window, or the rolling screen window. Therefore, when the folding screen window, or the rolling screen window is closed, the magnet can magnetically attract the metal sheet on the handle, so as to achieve the effect of tightly closing the door and window, the folding screen window, or the rolling screen window.

Furthermore, most the folding screen windows or the rolling screen windows use a wire to adjust tightness, and one end of the wire is disposed on the base 2 in the frame materials 9. Therefore, an adjustment mechanism 3 (such as a ratchet wheel, etc.) can be disposed in the accommodating space 200. By operation of the adjustment mechanism 3, the tension of the wire can be adjusted, so as to achieve the benefits of adjusting the tightness of the folding screen windows or the rolling screen windows. In addition, a cover 29 is provided on the notch 201 of the accommodating space 200 of each base 2, and the cover 29 can open and close the notch 201 of the accommodating space 20. In addition to the convenient installation of the adjusting mechanism or the magnet, the adjusting mechanism 3 and the magnet can also be covered, thereby enhancing the overall appearance.

To sum up, the connection device of the door and window frames of the present invention can be used to quickly connect two frame materials 9 without using tools through the bases 2, and the frame materials can be extended according to the construction requirements when installing doors and windows, the folding screen windows, or the rolling screen windows so as to meet various sizes and specifications. The present invention has the effect of quick and convenient application, which can optimize the construction efficiency, thereby achieving the purpose of the present invention.

It should be noted that, the above are only examples of the present invention, and should not limit the scope of the present invention. Any equivalent changes and modifications may be possible without departing from the content of the patent specification and the following claims.

## Claims

1. A connection device for door and window frames, **characterized in that** the connection device for door and window frames comprises a main body and two bases, wherein the two bases are respectively disposed on two opposite side surfaces of the main body to connect frame materials adjacent to the two opposite side surfaces of the main body.

2. The connection device for door and window frames according to claim 1, **characterized in that** the main body is provided with a first mounting portion in the direction of each base, and each base is provided with a second mounting portion opposite to first mounting portion of the main body, and the second mounting portion can be combined with the first mounting portion of the main body, so that the two bases can be fixed on two opposite side surfaces of the main body.

3. The connection device for door and window frames according to claim 2, **characterized in that** the first mounting portion has at least one latching space on the side surface of the main body, and the second mounting portion has an engaging portion opposite to the at least one latching space of the first mounting portion, and an upper edge of the engaging portion has a positioning portion.

4. The connection device for door and window frames according to claim 3, **characterized in that** the latching space is defined by a protruding rib and a plate body separated from the protruding rib at a distance, and the engaging portion can be engaged between the protruding rib and the plate body, the protruding rib abuts against the positioning portion.

5. The connection device for door and window frames according to claim 4, **characterized in that** the first mounting portion of the main body further comprises a positioning protrusion disposed on the plate body, and the second mounting portion of the base is provided with a positioning concave portion corresponding to the positioning protrusion.

6. The connection device for door and window frames according to claim 2, **characterized in that** the base is further provided with a coupling member facing toward the frame materials, and the coupling member can be combined with the frame materials.

7. The connection device for door and window frames according to claim 6, **characterized in that** an elastic hook portion is disposed on the coupling member.

8. The connection device for door and window frames according to claim 6, **characterized in that** the base is provided with an accommodating space, and the accommodating space has an opening in the direction of the coupling member.

9. The connection device for door and window frames according to claim 8, **characterized in that** a notch is disposed on a top portion of the accommodating space, and a cover is disposed on the notch.

10. The connection device for door and window frames according to claim 1, **characterized in that** the main body has a through hole, and a side cover is disposed on one of openings of the through hole.

11. The connection device for door and window frames according to claim 8, **characterized in that** an adjusting mechanism is accommodated in the accommodating space.
